# EUROPEAN PATENT APPLICATION

(11) **EP 1 753 197 A1**
(43) Date of publication of application: **14.02.2007**
(21) Application number: 05291606.1
(22) Date of filing: 27.07.2005
(51) Int. Cl.: H04L 29/06, H04L 29/08, H04L 9/32

(54) **Method for controlling the delivery of a flow of data to at least a client of a data provider**

(71) Applicant: Mitsubishi Electric Information Technology Centre Europe B.V., 1119 NS Schiphol Rijk (NL); MITSUBISHI DENKI KABUSHIKI KAISHA, Chiyoda-ku Tokyo 100-8310 (JP)
(72) Inventor: Voyer, Nicolas, c/o Mitsubishi Electric ITE, CS 10806 35708 Rennes Cedex 7 (FR); Pautonnier-Perrot, Sophie, CS 10806 35708 Rennes Cedex 7 (FR); Lavillonniere, Eric, c/o Mitsubishi Electric ITE, CS 10806 35708 Rennes Cedex 7 (FR)
(74) Representative: Maillet, Alain

(57) **Abstract**

The present invention concerns a method and a device for controlling the delivery, by an item provider (15), of a flow of items to at least a client (10) through a distribution network (140), a device for controlling the delivery of the flow of items (150) is associated to the item provider (15), the device for controlling the delivery of the flow of items being linked to a telecommunication network (120). The device for controlling the delivery of the flow of items (150), authorises (S510) the delivery of a first part of the flow of items to a client, receives (S502) a certificate, memorises (S507) the certificate, analyses (S506) the content of the certificate which comprises at least a signature of the client, a timestamp, and a value of items associated to the flow of items, decides (S508) whether or not the delivery of a second part of the flow of items according to the content of the certificate.

## Description

The present invention relates to a method for controlling the delivery of a flow of items to at least a client of an item provider.

In existing item distribution systems to clients through a distribution network, the items providers like water providers, electricity providers, gas providers, television programs providers, Internet access providers, telecommunication operators like a telephone service providers distribute to their clients items and clients pay an amount of money which normally corresponds to the items they got from the item providers.

For instance, a mapping between the volume, the consumption time, etc... and a currency value can be pre-agreed in advance between each client and the item provider. Then, the flow of item transferred to each client has to be measured precisely in order to warrant that the items providing is fair either for the clients or the items providers.

In many of the existing items distribution systems, the measure of the flow of items is realised in practise by the item provider. The clients must trust the measurement made by the item provider. If the distribution network is not working correctly, some erroneous measures can be made and the clients have no possibility to contest the measurements.

In order to avoid problems generated by the distribution networks, like some loss of items within the distribution networks, it has been installed in the client's premises some devices for measuring the items received. For instance, electricity providers or water providers have implemented such solution. It is then possible for the clients to verify the measurements. Similarly, mobile phones now offer some complementary traffic metering view, which help the customer check its communications.

Such possibility offered to the clients to check their consumption of items is not used a lot because, the measures are often difficult to access and to understand.

When the consumption of items increase suddenly, as example when a leak of water occurs in the premises of a client, or when some malicious persons pirate the telephone line of a client, a client can not be aware rapidly about that fact nor react to it. As these items are delivered under payment, it generates many troubles either for the client and the item provider.

In practise, dual measurements, at the client side and at the item provider side does not solve the trust issue. Indeed, in case of conflict between the measurements, the measurement made by the item provider prevails. The client can still complain about the measurement to a third party, and produce its own measurement, but the third party has no means to trust one measurement more than another one.

The aim of the invention is therefore to propose a method and a device which permit to the clients of an item provider to be able to check regularly the delivery of items by the item provider in a simple and efficient way. The present invention aims also to provide a method and a device which permit to clients to react as soon as a trouble is found in the consumption of items. Furthermore, the aim of the present invention is to propose a method and a device which permits to an item provider to get some proof of a consumption of items by its clients in order to avoid any conflicts.

To that end, the present invention concerns a method for controlling the delivery, by an item provider, of a flow of items to at least a client through a distribution network. A device for controlling the delivery of the flow of items is associated to the item provider, and is linked to a telecommunication network. The method comprises the steps, executed by the device for controlling the delivery of the flow of items, of :
- authorising the delivery of a first part of the flow of items to a client,
- receiving a certificate, through the telecommunication network issued by a device for checking the delivery of the flow of items which is associated to the client,
- memorising the certificate,
- analysing the content of the certificate which comprises at least a signature of the client, a timestamp, and a value of items associated to the flow of items,
- deciding whether or not the delivery of a second part of the flow of items according to the content of the certificate.

The present invention concerns also a device for controlling the delivery, by an item provider, of a flow of items to at least a client through a distribution network. The device for controlling the delivery of the flow of items is associated to the item provider and is linked to a telecommunication network. The device for controlling the delivery of the flow of items comprises :
- means for authorising the delivery of a first part of the flow of items to a client,
- means for receiving a certificate, through the telecommunication network issued by a device for checking the delivery of items associated to the client,
- means for memorising the certificate,
- means for analysing the content of the certificate which comprises at least a signature of the client, a timestamp, and a value of items associated to the flow of items,
- means for deciding whether or not the delivery of a second part of the flow of items according to the content of the certificate.

Thus, an item provider can control efficiently the delivery of items to its clients. If the item provider detects any problem with the value of items associated to the flow of items comprised in the certificate, it can stop the delivery of items.

The item provider can certify to a client that the client has consumed a given flow of item using the certificate and the signature. The present invention provides a secured agreement between the client and the item provider. When one party does not agree with the other party on the contents of the certificates, the delivery of parts of the flow of items and the delivery of certificates simply stop.

According to a particular feature, the signature is decoded with a public key of the client to form decoded information and it is determined if the decoded information are compatible at least with the timestamp and the value of items associated to the flow of items comprised in the certificate.

Thus, by getting a certificate from a client which is signed using a private key by the device for checking the delivery of items associated to the client, by decoding the signature using the public key of the client, the item provider has a proof of the consumption of items by a client and is able to check if the certificate is not corrupted.

According to a particular feature, it is transferred to the client, a list of information related to the last certificate or to all certificates received from the device for checking the delivery of the flow of items.

Thus, the item provider can transfer to a client a list, as example under the form of an invoice, of the items delivered to the client.

According to a particular feature, the value of items associated to the flow of items is representative of a measure, realised by a client measurement device of the client, of the first part of the flow of items and, the analysis comprises a comparison of the measure of the first part of the flow of items with the amount of items comprised in the first part of the flow of items authorised to be delivered.

Thus, it is possible to check if the measurement made by the client measurement device is correct or not or if there are some problems within the distribution network.

According to a particular feature, the value of items associated to the flow of items is also representative of a measure, realised by the client measurement device of the client, of all items comprised in parts of the flow of items received prior to the first part of the flow of items and items comprised in the first part of the flow of items.

Thus, the device for controlling the delivery of a flow of items doesn't need to memorise all the certificates it receives.

According to a particular feature, the certificate comprises another value of items which is representative of an expected amount of items comprised in the second part of the flow of items to be measured, by the client measurement device of the client, and the second part of the flow of items comprises an amount of items at least equal to the expected amount of items to be measured.

Thus, the item provider can be aware about the future needs of items by a client and adapt the delivery to it. The management of the item distribution is improved.

According to a particular feature, it is sent, through telecommunication network, a message representative of the end of delivery of a part of the flow of items, or a message representative of a request for receiving a certificate.

Thus, the item provider can decide by itself when it needs a certificate from a client.

According to a particular feature, it is determined if a certificate is needed by the item provider and if a certificate is needed, the device for controlling the delivery of the flow of items sends a command for stopping the distribution of items to the client.

Thus, the item provider can decide by itself when it needs a certificate from a client.

According to a particular feature, the first and the seconds parts of items comprise the same amount of items of the flow of items or a different amount of items, the amount of items comprised in the first and the second parts of items being defined by the device for checking the delivery of the flow of items and/or the device for controlling the delivery of the flow of items.

Thus, the delivery of the flow of items and the periodicity of the certificate reception is up to the client or the item provider or according to a mutual agreement.

According to a particular feature, the value of items associated to the flow of items is representative of an expected amount of items comprised in the second part of the flow of items to be measured, by the client measurement device of the client, and the second part of the flow of items comprises an amount of items at least equal to the expected amount of items to be measured.

Thus, the item provider can be aware about the future needs of items by a client and adapt the delivery to it. The management of the item distribution is improved.

The present invention concerns also a method for checking the delivery, by an item provider, of a flow of items to a least a client through a distribution network. A device for checking the delivery of the flow of items is associated to the client and is linked to a telecommunication network. The method comprises the steps, executed by the device for checking the delivery of the flow of items, of :
- obtaining an information representative of the receiving by the client of a first part of the flow of items from the item provider,
- determining if a certificate has to be transferred to the item provider,
- transferring to a device for controlling the delivery of the flow of items associated to the item provider, through the telecommunication network, a certificate comprising at least a signature, a timestamp and an information related to the flow of items, if a certificate has be to transferred.

The present invention concerns also a device for checking the delivery of a flow of items to a least a client through a distribution network. The device for checking the delivery of the flow of items is associated to the client and is linked to a telecommunication network, and, the device for checking the delivery of the flow of items comprises :
- means for obtaining an information representative of the receiving, by the client, of a first part of the flow of items from the item provider,
- means for determining if a certificate has to be transferred to the item provider,
- means for transferring to a device for controlling the delivery of the flow of items associated to the item provider, through the telecommunication network, a certificate comprising at least a signature, a timestamp and an information related to the flow of items, if a certificate has be to transferred.

Thus, a client can control efficiently the delivery of items by an item provider. By transferring or not a certificate, a client is able to stop the delivery of items as far as they are required by the item provider for providing other parts of the flow of items.

The present invention provides a secured agreement between the client and the item provider. When one party does not agree with the other party on the adequacy between the contents of the certificates and the delivered flow items, the flow of items and the flow of certificates simply stop.

According to a particular feature, the signature of the certificate is generated using a private key with at least the timestamp and the value of items associated to the flow of items.

Thus, as far as the private key is not known by any third party, it proofs the identity of the client and permits to detect if the content of the certificate is not corrupted.

Anyone who holds the public key associated to the private key of the client can check the integrity of the contents of the certificate, and that the certificate was indeed generated by the owner of the secret private key.

The present invention provides a secured agreement between the client and the item provider. After the deliver of the flow of items, the item provider can prove to a third party that the client has provided a set of certificates corresponding to the different parts of the flow. Also, the client can prove to a third party which certificates in that set of certificates were not generated by the client itself.

According to a particular feature, the information representative of the receiving from the item provider of a first part of the flow of items by the client is an amount of measured items comprised in the first part of the flow of items, and a certificate is transferred if the amount of the measured items is at least equal to a predetermined amount of items or is at least equal to an expected amount of items comprised in the first part of the flow of items.

Thus, when a client disagrees with the amount of items comprised in a part of the flow of items, it can stop the delivery of certificates. The client can also react immediately if an abnormal situation occurs like a leak of water occurs in the premises of the client, or when some malicious persons pirate the telephone line of a client.

According to a particular feature, a certificate is transferred if a message representative of the end of the delivery of the first part of the flow of items is received by the device for checking the delivery of the flow of items from the telecommunication network.

Thus, the device for checking the delivery of a flow of items doesn't have to manage when it has to transfer a certificate. It sends it only when the item provider needs one.

According to a particular feature, a certificate is transferred if it is detected that no part of items is received.

Thus, the device for checking the delivery of a flow of items doesn't have to manage when it has to transfer a certificate. It sends it only when the item provider needs one. The item provider indicates to the device for checking the delivery of a flow of items that it needs a certificate by stopping the delivery of parts of flow of items.

According to a particular feature, the value of items associated to the flow of items is representative of a measure, by a client measurement device of the client, of the amount of all items comprised in the first part of the flow of items and in parts of the flow of items measured prior the first part of the flow of items.

According to a particular feature, the certificate comprises another value of items which is representative of an expected amount of items comprised in the second part of the flow of items to be measured, by a client measurement device of the client.

Thus, the client can notify to an item provider any variations of its needs of items. As example, when a client needs more power electricity due to some installation of new equipments, he can notify such modification of need very simply.

Thus, the client, and more precisely the device for checking the delivery of a flow of items, is also able to control by himself the quantity of items he wants or commits to get.

According to a particular feature, the value of items associated to the flow of items is representative of an expected amount of items to be measured in the second part of the flow of items, by a client measurement device of the client.

Thus, the client can notify to an item provider any variations of its needs of items. As example, when a client needs more power electricity due to some installation of new equipments, he can notify such modification of need very simply.

According to a particular feature, it is checked whether or not a second part of the flow of items is received by the client once the certificate has been sent, and another certificate is retransferred if the second part of the flow is not received, the other certificate being the transferred certificate with an information indicating that the certificate is retransmitted.

Thus, even if a certificate is lost in the telecommunication network, the client can get other parts of the flow of items. By adding information indicating that the certificate is retransmitted, and by reusing the same time indicator inside the certificate, the item provider can not use the resend certificate and the supposed lost certificate for increasing artificially the items delivered to the client.

According to a particular feature, if the amount of the measured items within a predetermined time duration is lower than a predefined amount of items, the certificate comprises information representative of the no delivery of the predefined amount of items within a predetermined time duration.

Thus, if there is an agreement between the client and the item provider, as example for a given quality of service, the client can notify the item provider that such agreement is not respected. The item provider can use such information in order to check the reliability of the distribution network.

The present invention concerns also a signal transmitted by a device for checking the delivery of the flow of items being associated to a client of an item provider receiving a flow of items from the item provider, wherein the signal comprises a certificate comprising at least a signature, a timestamp and an information related to the flow of items.

According to a particular feature, the value of items associated to the flow of items is representative of a measure, by a client measurement device of the client, of a part of the flow of items.

According to a particular feature, the value of items associated to the flow of items is representative of an expected amount of items to be measured in the second part of the flow of items, by a client measurement device of the client.

Since the features and advantages relating to the signal are the same as those set out above related to the method and device according to the invention, they will not be repeated here.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the method and device according to the invention, they will not be repeated here.

The characteristics of the invention will emerge more clearly from a reading of the following description of an example embodiment, the said description being produced with reference to the accompanying drawings, among which :
Fig. 1 is a diagram representing the architecture of the system for controlling the delivery of a flow of items to at least a client according to the present invention ;
Fig. 2 is a block diagram of a device for checking the delivery of the flow of items according to the present invention ;
Fig. 3 is a block diagram of a device for controlling the delivery of the flow of items according to the present invention ;
Fig. 4 is an algorithm executed by a device for checking the delivery of the flow of items according to the present invention ;
Fig. 5 is an algorithm executed by the device for controlling the delivery of the flow of items according to the present invention.

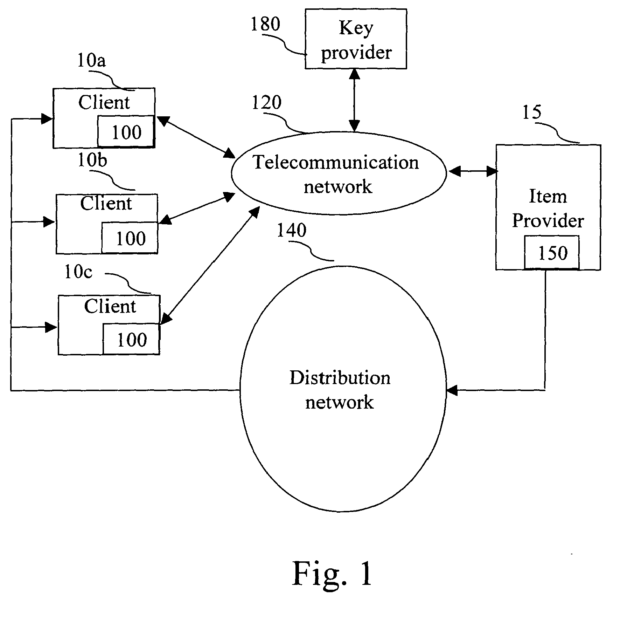

**Fig. 1** is a diagram representing the architecture of the system for controlling the delivery of a flow of items to at least a client according to the present invention.

An item provider 15 delivers flows of items to some client 10a, 10b and 10c through a distribution network 140.

An item is, as example, a volume of water, a quantity of electric power, a volume of gas or gasoline, some time duration of a television program or an amount of data related to a television program within or not a predetermined time duration, an access during some duration of time to Internet or an amount of data transmitted to or received from Internet within or not a predetermined time duration, an access during some time duration to telephone services or some amount of data transmitted through a telephone network and so on within or not a predetermined time duration.

An item provider 15 is, as example, a water provider, an electricity provider, a gas provider, a television programs provider, an Internet access provider, a telecommunication operator like a telephone service provider.

A flow of items is composed of items which should be delivered continuously, regularly, or intermittently.

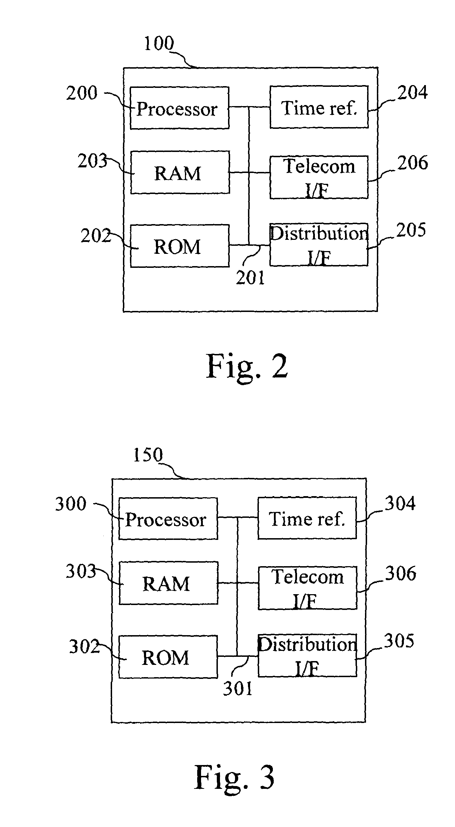

To each client 10, it is associated a device for checking the delivery of the flow of items 100. The device for checking the delivery of the flow of items 100 is installed in the client 10 premises or in an apparatus of the client 10, as example a mobile phone, which receives the flow of items. The device for checking the delivery of the flow of items 100 will be disclosed latter in reference to the Fig. 2. The item provider 15 has a device for controlling the delivery of the flow of items 150 which will be disclosed latter in reference to the Fig. 3.

The device for checking the delivery of the flow of items 100 is connected through a telecommunication network 120 to the device for controlling the delivery of the flow of items 150.

The telecommunication network 120 is, as example an Internet network, a mobile, wireless or wired telephone network.

It has to be noted here that, if the items are related to a television program, an access to Internet or to telephone services, the distribution network 140 and the telecommunication network 120 may be combined in the same network.

A key provider 180 is connected to the telecommunication network 120. Each client 10 can decide on its own of a pair public and private keys, or get them anonymously from a reliable key provider 180 via the telecommunication network. The client 10 keeps its private key secret, and delivers to the item provider 15 its public key, which permits an authentication of the client 10 by the item provider 15. The private key is used by the client 10 to generate a signature with at least the value of items associated to the flow of items and the timestamp. The client 10 then transmits the certificate which comprises at least the signature to the item provider 15, a timestamp and the value of items associated to the flow of items. The public key, known by the item provider 15, can be used together with the content of the certificate, to guarantee the integrity of the content of the certificate, and to authenticate the client 10. The nature of private and public keys, the signature generation, the integrity detection, and the source authentication scheme can be taken, for instance, to comply with RSA authentication algorithm.

According to the invention, each certificate comprises at least the client 10 identity, a timestamp of the certificate, the signature and a value of items associated to the flow of items.

It has to be noted here that according to a preferred mode of realisation, each certificate is sent when a client measurement device measures a predefined amount of items. Such amount of items can be equal to a fixed amount of items agreed previously by the device for checking the delivery of the flow of items 100 and the device for controlling the delivery of the flow of items 150. The predefined amount of item can be equal to an amount of items which follows a predetermined formula agreed previously by the device for checking the delivery of the flow of items 100 and the device for controlling the delivery of the flow of items 150.

In a first variant of realisation of the invention, each certificate comprises an expected amount of items to be measured within or not a predetermined time duration.

In a second variant of realisation of the invention, each certificate comprises the value of the measured items, by the device for checking the delivery of the flow of items 100, between the time and/or date of transmission of a previous certificate and the time and/or date of transmission of the certificate. The previous certificate is the certificate just previously sent or the first certificate which has been sent for the flow of items or else.

In a third variant of realisation of the present invention, each certificate comprises the value of the measured items, by the client measuring device, between the time and/or date of transmission of a previous certificate and the time and/or date of transmission of the certificate. Each certificate comprises also an expected amount of item to be consumed within or not a predetermined time duration.

In a fourth variant of realisation of the present invention, the certificate is sent when the device for checking the delivery of the flow of items 100 receives from the telecommunication network 120, a predetermined information representing an end of transmission of a part of the flow of items or a request for receiving a certificate.

In a fifth variant of realisation of the present invention, the certificate is sent when the device for checking the delivery of the flow of items 100 detects the interruption of delivery of parts of the flow of items.

In a sixth variant of realisation of the present invention, if no items are received once a certificate has been sent, the device for checking the delivery of the flow of items 100 resends the certificate to the device for controlling the delivery of the flow of items 150. Such resent certificate comprises an additional information which indicates that it duplicates a previously sent certificate and has the same timestamp as the previously sent certificate.

According to the seventh variant of realisation, the value of items associated to the flow of items is set to a predefined value if the measured items, by the client measurement device is upper than the predefined value. The certificate may also comprise a volume excess indication.

According to a eighth variant of the invention, if the amount of the measured items within a predetermined time duration is lower than a predefined amount of items, the certificate comprises information representative of the no delivery of the predefined amount of items within a predetermined time duration.

**Fig. 2** is a block diagram of a device for checking the delivery of the flow of items according to the present invention.

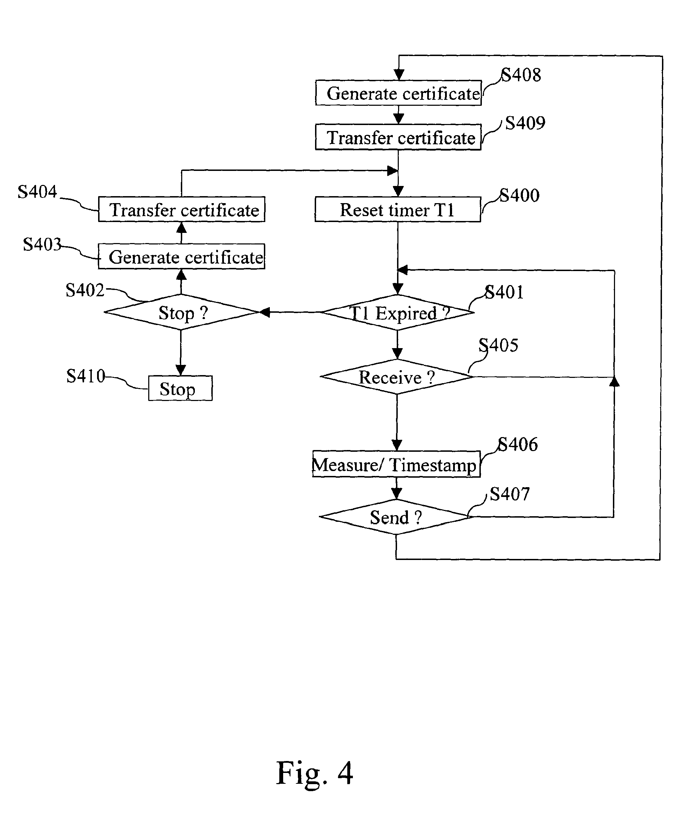

The device for checking the delivery of the flow of items 100 has, for example, an architecture based on components connected together by a bus 201 and a processor 200 controlled by programs as disclosed in the Fig. 4.

The bus 241 links the processor 200 to a read only memory ROM 202, a random access memory RAM 203, a telecommunication network interface 206 a distribution interface 205, and a time provision source 204.

The memory 203 contains registers intended to receive variables, public and private keys and the instructions of the programs related to the algorithm as disclosed in the Fig. 4.

The processor 200 controls the operation of the telecommunication network interface 206 and the distribution interface 205, and can get time indications from the time provision source 204.

The time provision source 204 is synchronised up to a given accuracy with the time provision sources of other equipment present in the telecommunication network 140, so that all equipment connected to the telecommunication network 140 share a common time reference.

The read only memory 202 contains instructions of the programs related to the algorithm as disclosed in the Fig. 4 which are transferred, when the device for checking the delivery of the flow of items 100 is powered on to the random access memory 203.

The device for checking the delivery of the flow of items 100 is connected to the telecommunication network 120 through the network interface 206. As example, the network interface 206 is a DSL (Digital Subscriber Line) modem, or an ISDN (Integrated Services Digital Network) interface, or PLC (Power Line Communication) interface, or a wireless interface, etc. Through such interface, the device for checking the delivery of the flow of items 100 transfers certificates to the device for controlling the delivery of the flow of items 150.

The distribution interface 205 comprises means for obtaining a measure of the items transmitted and/or received by the client 10. The means for obtaining a measure of the items are a communication interface with a client measurement system which is located in the premises of the client 10 or with a client measurement system which is integrated in the distribution interface 205. It has to be noted here that, if the items are related to a television program, an access to Internet or telephone services the telecommunication network interface 205 and the distribution interface 206 may be combined in the same interface.

**Fig. 3** is a block diagram of a device for controlling the delivery of the flow of items according to the present invention.

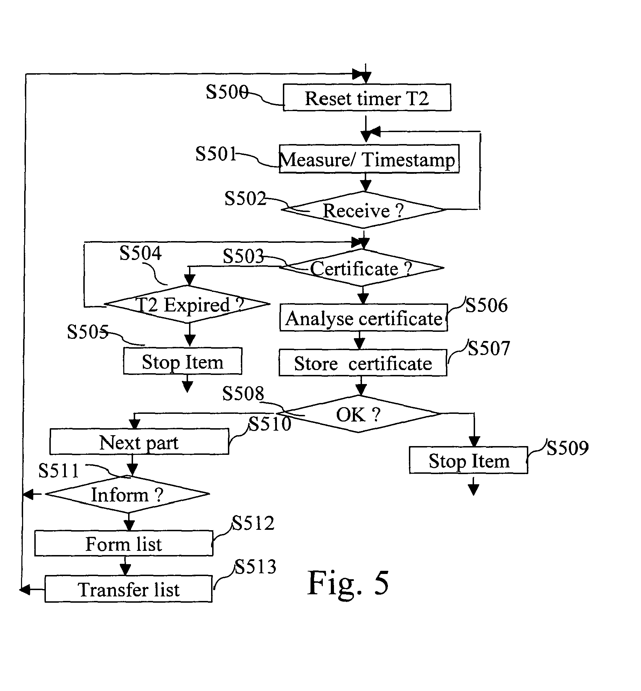

The device for controlling the delivery of the flow of items 150 has, for example, an architecture based on components connected together by a bus 301 and a processor 300 controlled by programs as disclosed in the Fig. 5.

The bus 301 links the processor 300 to a read only memory ROM 302, a random access memory RAM 303, a telecommunication network interface 306 a distribution interface 305, and a time provision source 304.

The memory 303 contains registers intended to receive variables, certificates transferred by the devices for checking the delivery of the flow of items 100 and the instructions of the programs related to the algorithm as disclosed in the Fig. 5.

The processor 300 controls the operation of the telecommunication network interface 306 and the distribution interface 305, and can get time indications from the time provision source 304.

The time provision source is synchronised with the time provision sources of other equipment present in the telecommunication network 140, so that all equipment connected to the telecommunication network 140 share a common time reference.

The read only memory 302 contains instructions of the programs related to the algorithm as disclosed in the Fig. 5 which are transferred, when the provider 150 is powered on to the random access memory 303.

The device for controlling the delivery of the flow of items 150 is connected to the telecommunication network 120 through the network interface 306. As example, the network interface 306 is a DSL modem, or an ISDN interface, or a PLC interface, or a wireless interface, etc. Through such interface, the device for controlling the delivery of the flow of items 150 receives certificates from the devices for checking the delivery of the flow of items 100.

The distribution interface 305 comprises means for transferring to the distribution network 140 some commands for stopping or enabling the distribution of parts of items to each client 10.

According to some variant of realization, the distribution interface comprises means for obtaining some measures of the flow of items consumed by each client 10. The measures of the flow of items are made by a provider measurement device which is integrated or not in the distribution interface 305.

It has to be noted here that, if the item is related to a television program, an access to Internet or telephone services the telecommunication network interface 306 and the distribution interface 307 may be combined in the same interface.

**Fig. 4** is an algorithm executed by a device for checking the delivery of the flow of items according to the present invention.

The processor 200 of each device for checking the delivery of the flow of items 100 of the clients 10a, 10b and 10c executes the present algorithm. When several flow of items, as example flow of items related to a communication combining voice transfer, data transfer, video, are delivered to a client 10, the processor 200 execute the present algorithm for each flow of items.

According to the preferred mode of realization, or to the second, the fourth, the fifth and the sixth variants of realisation, the processor 200 starts the present algorithm at step S400.

At step S400, the processor 200 resets a timer noted T1 to a predetermined value. The predetermined value of T1 is equal to one or several seconds or minutes or to one or several months depending of the concerned flow of items.

At next step S401, the processor 200 checks whether or not the timer T1 is expired. The timer T1 representative of a period of time in which, an amount of items which corresponds to a part of the flow of items, has to be measured.

If the timer T1 is expired, it means that the item provider 15 has not provided the part of the flow of items which comprises the expected amount of items or the predefined amount of items. The processor 200 moves to step S402.

At step 402, the processor 200 checks whether or not it has to stop to transfer any certificate to the device for controlling the deliver of the flow of items 150.

According to the sixth variant of realisation, the processor 200 checks if the last transmitted certificate comprises an information indicating that the certificate was retransmitted.

If such resent certificate has already been transferred, the processor 200 moves to step S410. If such certificate has not already been transferred, the processor 200 moves to step S403.

If a flow stop decision is taken at step S402, the processor moves to step S410, and stops to send any certificate as far as such case is abnormal.

In case the decision to stop is not taken, the processor moves to step S403.

At step S403, the processor 200 generates a certificate. The certificate comprises at least the client 10 identity, the date and/or time when the certificate is generated and a signature of the certificate. Such signature is made by the device for checking the delivery of the flow of items 100 using the private key of the client 10.

According to the sixth variant of realisation, the certificate is a resent certificate. It comprises an additional information which indicates that it duplicates a previously sent certificate and has the same timestamp as the previously sent certificate.

According to a eighth variant of the invention, if the amount of the measured items within a predetermined time duration is lower than a predefined amount of items, the certificate comprises information representative of the no delivery of the predefined amount of items within a predetermined time duration.

At next step S404, the processor 200 transfers the certificate to the device for controlling the delivery of the flow of items 150 through the telecommunication network interface 206. The processor 200 then moves to step S400.

If the timer T1 is not expired, the processor 200 moves from step S401 to step S405.

At step S405, the processor 200 checks through the distribution interface if any item of a part of the flow of items is measured.

If at least an item is measured, i.e. consumed by the client 10, the processor 200 moves to step S406.

If no item is received, the processor 200 moves to step S401.

At step S406, the processor 200 gets, from the distribution interface 205, the value of the measured items comprised in a part of the flow of items. At the same time, the processor 200 stores that value in the RAM memory 203.

At next step S407, the processor 200 checks whether or not it has to send a certificate.

The processor 200 decides whether it has to send a certificate by checking if the measured amount of items comprised in the part of the flow of items is at least equal to a predefined amount of items. The predefined amount of item is equal to a fixed amount of items agreed previously by the device for checking the delivery of the flow of items 100 and the device for controlling the delivery of the flow of items 150. The predefined amount of items can be also equal to an amount of items which follows a predetermined formula agreed previously by the device for checking the delivery of the flow of items 100 and the device for controlling the delivery of the flow of items 150. The predefined amount of item is, according to the first or third variants, the expected amount of items comprised in a previously sent certificate.

According to the fourth variant, the processor 200 decides that it has to send a certificate if a predetermined information representing the end of a transmission of items or a request for receiving a certificate is received from the telecommunication network 120.

According to the fifth variant, the processor 200 decides that it has to send a certificate if it detects an interruption in the delivery of parts of the continuous or regular flow of items.

It has to be noted here that, if the value of the measured items comprised in a part of the flow of items is upper than a predetermined value which corresponds to a normal consumption of items by a client 10, the processor 200 decides that no certificate has to be sent and moves from step S407 to step S401. According to the seventh variant of realisation, if the value of the measured items comprised in a part of the flow of items is upper than a predefined value which corresponds to a normal consumption of items by a client 10, the processor 200 decides to send a certificate.

According to the eighth variant of realisation, if the amount of the measured items within a predetermined time duration is lower than a predefined amount of items, the processor 200 decides to send a certificate which comprises information representative of the no delivery of the predefined amount of items within a predetermined time duration.

If no certificate has to be sent, the processor 200 moves to step S401.

If a certificate has to be sent, the processor 200 moves to step S408 and generates a certificate. The certificate comprises at least the client 10 identity, the date and/or time the certificate is generated, a signature of the certificate and a value of items associated to the flow of items.

According to the first variant of realisation, the value of items associated to the flow of items is an expected amount of items to be received in a second part of the flow of items within or not a predetermined time duration.

According to the second variant of realisation, the value of items associated to the flow of items is the value of the measured items, by the client measurement device, between a certificate transmitted prior to the transmission of the certificate, i.e the amount of items comprised in the part of the flow of items.

According to the third variant of realisation, each certificate comprises the value of the measured items, by the client measuring device, between the time and/or date of transmission of a previous certificate and the time and/or date of transmission of the certificate. Each certificate comprises also an expected amount of item to be consumed within or not a predetermined time duration, i.e the amount of items comprised in several parts of the flow of items.

According to the seventh variant of realisation, the value of items associated to the flow of items is set to a predefined value if the value of the measured items, by the client measurement device, is upper than the predefined value. The certificate may also comprise a volume excess indication.

According to the eighth variant of realisation, if the amount of the measured items within a predetermined time duration is lower than a predefined amount of items the certificate comprises information representative of the no delivery of the predefined amount of items within a predetermined time duration.

It has to be noted that the signature is calculated using all or part of the values or information mentioned above.

At next step S409, the processor 200 transfers the certificate to the device for controlling the delivery of the flow of items 150 through the telecommunication network interface 206.

The processor 200 then returns to step S400.

According to the first and third variants of realisation, the processor 200 starts the present algorithm at step S408.

According to the third variant of realisation, the value of the measured items comprised in the first certificate sent is set to zero.

The processor 200 can also stop the execution of the algorithm at any moment.

**Fig. 5** is an algorithm executed by a device for controlling the delivery of the flow of items which controls the delivery of a flow of items according to the present invention.

The processor 300 of the device for controlling the delivery of the flow of items 150 executes the present algorithm in parallel for each of the clients 10 it provides items. When several flow of items, as example flow of items related to a communication combining voice transfer, data transfer, video, are delivered to a client 10, the processor 300 execute the present algorithm for each flow of items.

At step S500, the processor 300 resets a timer noted T2 to a predetermined value. The predetermined value of T2 is equal to one or several seconds or minutes or to one or several months depending of the concerned application. Then processor 300 then moves to step S502.

At that step, and according to the fourth variant of realisation of the present invention, the processor 300 decides that it needs a certificate and sends through the telecommunication network 120, a predetermined information representing an end of transmission of a part of the flow of items or a request for receiving a certificate.

According to the fifth variant of realisation of the present invention, the processor 300 decides that it needs a certificate and generates at that step, a command for interrupting the delivery of parts of the flow of items to the client 10.

In a variant of realization, the processor 300 moves from step S500 to the step S501. The processor 300 gets, from the distribution interface 305, the value of the measured items which are or have been delivered to a client 10, as example the client 10a. At the same time, the processor 300 stores the value measured for client 10a in the RAM memory 303.

According to the eighth variant, the processor 300 also stores the period of time for which the measure of items has been conducted in the RAM memory 303. The period of time and the measure of items permits to evaluate a quality of service like, as example, a bit rate or a latency in the delivery of parts of the flow of items.

At next step S502, the processor 300 checks whether or not it has to receive a certificate issued by the client 10a.

The processor 300 decides whether it has to receive a certificate by checking if a part of the flow of items comprising a predefined amount of items has been transferred to the client 10, or if the measured amount of items at step S501 is at least equal to a predefined amount of items.

The predefined amount of item is, according to the preferred mode of realisation, equal to a fixed amount of items agreed previously by the device for checking the delivery of the flow of items 100 and the device for controlling the delivery of the flow of items 150. The predefined amount of items can be equal to an amount of items which follows a predetermined formula agreed previously by the device for checking the delivery of the flow of items 100 and the device for controlling the delivery of the flow of items 150. The predefined amount of item is, according to the first or third variants, the expected amount of item comprised in a previously received certificate.

According to the fourth variant, the processor 300 decides that it has to receive a certificate if a predetermined information representing the end of a transmission of items or a request for receiving a certificate has been sent to the device for checking the delivery of the flow of items 100 through the telecommunication network 120.

If no certificate has to be received, the processor 300 returns to step S501 already described.

If a certificate has to be received, the processor 300 moves to step S503 and checks whether or not a certificate has been received from the device for checking the delivery of the flow of items 100 through the telecommunication network 120.

If no certificate has been received, the processor 300 moves to step S504.

At step S504, the processor 300 checks whether or not the timer T2 is expired. The timer T2 representative of a period of time in which a certificate has to be transferred by the device for checking the delivery of the flow of items 100.

If the timer T2 is expired, it means that the client 10a has not provided the expected certificate. The processor 300 moves to step S505 and generates a command to the distribution network 140 in order to stop to deliver any further parts of the flow of items to the client 10a.

If the timer T2 is not expired, the processor 300 returns to step S503.

If a certificate has been received, the processor 300 moves to step S506.

At step S506, the processor 300 analyses the received certificate. The processor 300 uses the public key of the client 10a provided by the certificate provider 180 in order to authenticate the client 10a and to recover the signature of the client 10a and the information comprised within the certificate.

For that, the processor 300 decodes the signature with the public key of the client 10 to form decoded information and it determines if the decoded information are compatible with at least the timestamp of when the certificate has been generated by the client 10 and the value of items associated to the flow of items comprised in the certificate.

According to the first variant of realisation, the certificate comprises also an expected amount of items to be delivered to the client 10.

According to the second variant of realisation, the certificate comprises also the value of the measured items, by the device for checking the delivery of the flow of items 100, between a certificate transmitted prior to the transmission of the certificate.

According to the third variant of realisation, each certificate comprises the value of the measured items, by the client measuring device, between the time and/or date of transmission of a previous certificate and the time and/or date of transmission of the certificate. Each certificate comprises also an expected amount of item to be consumed within or not a predetermined time duration.

According to the sixth variant of realisation, the certificate comprises an additional information which indicates that it duplicates a previously sent certificate and has the same timestamp as the previously sent certificate.

According to the seventh variant of realisation, the certificate comprises a volume excess indication, which indicates that the value of the measured items is set to a predefined value, which is lower than the actual value of measured items. The item provider can use that information in order to check if there is any trouble in the distribution network 140 or with the client 10.

According to the eighth variant of realisation, the certificates comprises information representative of the no delivery of the predefined amount of items within a predetermined time duration.

At next step S507, the processor 300 memorizes the received certificates and information comprised within the certificate.

At next step S508, the processor 300 checks whether or not the information comprised in the certificate are correct or not.

The processor 300 checks the identity of the client 10a, the signature and if the value of items associated with the flow of items corresponds to a predefined value.

According to the second and third variants of realisation, the processor 300 checks if the value of the measured items, by the device for checking the delivery of the flow of items 100, corresponds to the value memorised at step S501.

According to the seventh variant of the realisation, if the certificate comprises a volume excess indication, which indicates that the value of the measured items is set to a predefined value, the processor 300 obtains the value memorized at step S501 and compares it to the predefined value. If the values are almost equal, the content is considered as correct. If the values are different, the content is considered as not correct.

According to the eighth variant of the realisation, if the certificate contains information representative of the no delivery of the predefined amount of items within a predetermined time duration, the processor 300 also checks if the time duration memorised at step S501 corresponds to the predetermined time duration value agreed with the client 10a. The processor 300 also checks if the value of delivered items memorised at step S501 correspond to the predefined amount of items agreed with the client 10.

If the time duration memorised at step S501 is equal to or lower than the predetermined time duration, and if the value of delivered items memorised at step 501 is equal to or higher than the predefined amount of items, the certificate is not correct.

If the time duration memorised at step S501 is higher than the predetermined time duration, or if the value of delivered items memorised at step S501 is lower than the predefined amount of items, the certificate is correct.

If the content of the certificate is not correct, the processor 300 moves to step S509 and stops to send any item to the client 10a. If the certificate is correct, the processor 300 enables the transfer of another part of the flow of items at step S510.

If the information are correct, the processor 300 moves to step S511.

At that step, the processor 300 checks whether or not it has to inform the client 10a. The processor 300 informs regularly the client 10a, as example on a monthly bases, or when the amount of items reach a predetermined quantity, by transferring to the client 10a, the list of information related to the last or to all received certificates or an invoice comprising an amount of money to be paid calculated using the value of items associated to the flow of items comprised in the received certificates.

If the processor 300 has not to inform the client 10a, it returns to step S500.

If the processor 300 has to inform the client 10a, the processor 300 moves to step S512.

At that step, the processor 300 forms a list. The list comprises the quantity of items and/or the list of certificates it has received or the last received certificate, or an invoice.

At next step S513, the list is transferred to the client 10a.

When such operation is executed the processor 300 returns to the step S500.

Naturally, many modifications can be made to the embodiments of the invention described above without departing from the scope of the present invention.

## Claims

1. Method for controlling the delivery, by an item provider (15), of a flow of items to at least a client (10) through a distribution network (140), **characterised in that** a device for controlling the delivery of the flow of items (150) is associated to the item provider (15), the device for controlling the delivery of the flow of items (150) being linked to a telecommunication network (120), and **in that** the method comprises the steps, executed by the device for controlling the delivery of the flow of items (150), of:
- authorising (S510) the delivery of a first part of the flow of items to a client,
- receiving (S502) a certificate, through the telecommunication network issued by a device for checking the delivery of the flow of items (100) which is associated to the client (10),
- memorising (S507) the certificate,
- analysing (S506) the content of the certificate which comprises at least a signature of the client, a timestamp, and a value of items associated to the flow of items,
- deciding (S508) whether or not the delivery of a second part of the flow of items according to the content of the certificate.

2. Method according to claim 1, **characterised in that** the signature is decoded with a public key of the client to form decoded information and it is determined if the decoded information are compatible at least with the timestamp and the value of items associated to the flow of items comprised in the certificate.

3. Method according to claim 2, **characterised in that** the method further comprises the step of transferring (S512) to the client a list of information related to the last certificate or to all certificates received from the device for checking the delivery of the flow of items.

4. Method according to any of the claims 1 to 3, **characterised in that** the value of items associated to the flow of items is representative of a measure, realised by a client measurement device of the client, of the first part of the flow of items and **in that**, the analysing step comprises a comparison of the measure of the first part of the flow of items with the amount of items comprised in the first part of the flow of items authorised to be delivered.

5. Method according to any of the claims 1 to 3, **characterised in that** the value of items associated to the flow of items is representative of a measure, realised by a client measurement device of the client, of the items comprised in the first part of the flow of items and items comprised in parts of the flow of items received prior to the first part of the flow of items.

6. Method according to claim 4 or 5, **characterised in that** the certificate comprises another value of items which is representative of an expected amount of items comprised in the second part of the flow of items to be measured, by the client measurement device of the client, and **in that**, the second part of the flow of items comprises an amount of items at least equal to the expected amount of items to be measured.

7. Method according to claim 6, **characterised in that** the method further comprises the step of sending (S500) through telecommunication network a message representative of the end of delivery of the a part of the flow of items or a message representative of a request for receiving a certificate.

8. Method according to claim 6, **characterised in that** the method further comprises the steps of determining if a certificate is needed by the item provider, and if a certificate is needed, sending (S500) a command for stopping the distribution of items to the client.

9. Method according to any of the claims 1 to 3, **characterised in that** the first and the seconds parts of items comprise the same amount of items of the flow of items or a different amount of items, the amount of items comprised in the first and the second parts of items being defined by the device for checking the delivery of the flow of items and/or the device for controlling the delivery of the flow of items.

10. Method according to any of the claims 1 to 3, **characterised in that** the value of items associated to the flow of items is representative of an expected amount of items comprised in the second part of the flow of items to be measured, by the client measurement device of the client, and **in that**, the second part of the flow of items comprises an amount of items at least equal to the expected amount of items to be measured.

11. Method for checking the delivery, by an item provider (15), of a flow of items to a least a client (10) through a distribution network (140), **characterised in that**, a device for checking the delivery of the flow of items (100) being associated to the client, the device for checking the delivery of the flow of items being linked to a telecommunication network (120), and **in that**, the method comprises the steps, executed by the device for checking the delivery of the flow of items (100), of :
- obtaining (S405) an information representative of the receiving by the client of a first part of the flow of items from the item provider,
- determining (S407) if a certificate has to be transferred to the item provider,
- transferring (S409) to a device for controlling the delivery of the flow of items associated (150) to the item provider (15), through the telecommunication network, a certificate comprising at least a signature, a timestamp and an information related to the flow of items, if a certificate has be to transferred.

12. Method according to claim 9, **characterised in that** the signature of the certificate is generated using a private key with at least the timestamp and the value of items associated to the flow of items.

13. Method according to claim 11 or 12, **characterised in that** the information representative of the receiving from the item provider of a first part of the flow of items by the client is an amount of measured items comprised in the first part of the flow of items, and a certificate is transferred if the amount of the measured items is at least equal to a predetermined amount of items or is at least equal to an expected amount of items comprised in the first part of the flow of items.

14. Method according to claim 11 or 12, **characterised in that** a certificate is transferred if a message representative of the end of the delivery of the first part of the flow of items is received by the device for checking the delivery of the flow of items from the telecommunication network.

15. Method according to claim 11, **characterised in that** the value of items associated to the flow of items is representative of a measure, by a client measurement device of the client, of the amount of items comprised in the first part of the flow of items.

16. Method according to claim 11 or 12, **characterised in that** the value of items associated to the flow of items is representative of a measure, by a client measurement device of the client, of the amount of items comprised in the first part of the flow of items and items comprised in parts of the flow of items prior the first part of the flow of items.

17. Method according to claim 15 or 16, **characterised in that** the certificate comprises another value of items which is representative of an expected amount of items comprised in the second part of the flow of items to be measured, by a client measurement device of the client.

18. Method according to claim 11, **characterised in that** the value of items associated to the flow of items is representative of an expected amount of items to be measured in the second part of the flow of items, by a client measurement device of the client.

19. Method according to claim 11 or 12, **characterised in that** the method comprises the steps of :
- checking (S405) whether or not a second part of the flow of items is received by the client once the certificate has been sent,
- retransferring (S404) another certificate if the second part of the flow is not received, the other certificate being the transferred certificate with an information indicating that the certificate is retransmitted.

20. Method according to claim 11 or 12, **characterised in that**, if the amount of the measured items within a predetermined time duration is lower than a predefined amount of items, the certificate comprises information representative of the no delivery of the predefined amount of items within the predetermined time duration.

21. Device (150) for controlling the delivery, by an item provider, of a flow of items to at least a client through a distribution network, **characterised in that** the device for controlling the delivery of the flow of items is associated to the item provider and is linked to a telecommunication network, and **in that** the device for controlling the delivery of the flow of items comprises :
- means (300, 305) for authorising the delivery of a first part of the flow of items to a client,
- means (306) for receiving a certificate, through the telecommunication network issued by a device for checking the delivery of items associated to the client,
- means (303) for memorising the certificate,
- means (300) for analysing the content of the certificate which comprises at least a signature of the client, a timestamp, and a value of items associated to the flow of items,
- means (300) for deciding whether or not the delivery of a second part of the flow of items according to the content of the certificate.

22. Device (100) for checking the delivery of a flow of items to a least a client through a distribution network, **characterised in that**, the device for checking the delivery of the flow of items is associated to the client and is linked to a telecommunication network, and **in that**, the device for checking the delivery of the flow of items comprises :
- means (205) for obtaining an information representative of the receiving by the client of a first part of the flow of items from the item provider,
- means (200) for determining if a certificate has to be transferred to the item provider,
- means (200, 206) for transferring to a device for controlling the delivery of the flow of items associated to the item provider, through the telecommunication network, a certificate comprising at least a signature, a timestamp and an information related to the flow of items, if a certificate has be to transferred.

23. Signal transmitted by a device for checking the delivery of the flow of items being associated to a client of an item provider receiving a flow of items from the item provider, **characterised in that**, the signal comprises a certificate comprising at least a signature, a timestamp and an information related to the flow of items.

24. Signal according to claim 22, **characterised in that** the value of items associated to the flow of items is representative of a measure, by a client measurement device of the client, of a part of the flow of items.

25. Signal according to claim 23, **characterised in that** the value of items associated to the flow of items is representative of an expected amount of items to be measured in the second part of the flow of items, by a client measurement device of the client.

26. Computer program which can be directly loadable into a programmable device, comprising instructions or portions of code for implementing the steps of the method according to claims 1 to 10, when said computer program is executed on a programmable device.

27. Computer program which can be directly loadable into a programmable device, comprising instructions or portions of code for implementing the steps of the method according to claims 11 to 20, when said computer program is executed on a programmable device.

## Amended claims

### Amended claims in accordance with Rule 86(2) EPC.

**1.** Method for controlling the delivery, by an item provider (15), of a flow of items to at least a client (10) through a distribution network (140), **characterised in that** a device for controlling the delivery of the flow of items (150) is associated to the item provider (15), the device for controlling the delivery of the flow of items (150) being linked to a telecommunication network (120), and **in that** the method comprises the steps, executed by the device for controlling the delivery of the flow of items (150), of :
- authorising (S510) the delivery of a first part of the flow of items to a client,
- receiving (S502) a certificate, through the telecommunication network issued by a device for checking the delivery of the flow of items (100) which is associated to the client (10),
- memorising (S507) the certificate,
- analysing (S506) the content of the certificate which comprises at least a signature of the client, a timestamp, and a value of items associated to the flow of items,
- deciding (S508) whether or not the delivery of the flow of items has to be stopped according to the content of the certificate.

**2.** Method according to claim 1, **characterised in that** the signature is decoded with a public key of the client to form decoded information and it is determined if the decoded information are compatible at least with the timestamp and the value of items associated to the flow of items comprised in the certificate.

**3.** Method according to claim 2, **characterised in that** the method further comprises the step of transferring (S512) to the client a list of information related to the last certificate or to all certificates received from the device for checking the delivery of the flow of items.

**4.** Method according to any of the claims 1 to 3, **characterised in that** the value of items associated to the flow of items is representative of a measure, realised by a client measurement device of the client, of the first part of the flow of items and **in that**, the analysing step comprises a comparison of the measure of the first part of the flow of items with the amount of items comprised in the first part of the flow of items authorised to be delivered.

**5.** Method according to any of the claims 1 to 3, **characterised in that** the value of items associated to the flow of items is representative of a measure, realised by a client measurement device of the client, of the items comprised in the first part of the flow of items and items comprised in parts of the flow of items received prior to the first part of the flow of items.

**6.** Method according to claim 4 or 5, **characterised in that** the certificate comprises another value of items which is representative of an expected amount of items comprised in the second part of the flow of items to be measured, by the client measurement device of the client, and **in that**, the second part of the flow of items comprises an amount of items at least equal to the expected amount of items to be measured.

**7.** Method according to claim 6, **characterised in that** the method further comprises the step of sending (S500) through telecommunication network a message representative of the end of delivery of the a part of the flow of items or a message representative of a request for receiving a certificate.

**8.** Method according to claim 6, **characterised in that** the method further comprises the steps of determining if a certificate is needed by the item provider, and if a certificate is needed, sending (S500) a command for stopping the distribution of items to the client.

**9.** Method according to any of the claims 1 to 3, **characterised in that** the first and the seconds parts of items comprise the same amount of items of the flow of items or a different amount of items, the amount of items comprised in the first and the second parts of items being defined by the device for checking the delivery of the flow of items and/or the device for controlling the delivery of the flow of items.

**10.** Method according to any of the claims 1 to 3, **characterised in that** the value of items associated to the flow of items is representative of an expected amount of items comprised in the second part of the flow of items to be measured, by the client measurement device of the client, and **in that**, the second part of the flow of items comprises an amount of items at least equal to the expected amount of items to be measured.

**11.** Method for checking the delivery, by an item provider (15), of a flow of items to a least a client (10) through a distribution network (140), **characterised in that**, a device for checking the delivery of the flow of items (100) is associated to the client, the device for checking the delivery of the flow of items being linked to a telecommunication network (120), and **in that**, the method comprises the steps, executed by the device for checking the delivery of the flow of items (100), of :
- obtaining (S405) an information representative of the receiving by the client of a first part of the flow of items from the item provider,
- determining (S407) if a certificate has to be transferred to the item provider,
- transferring (S409) to a device for controlling the delivery of the flow of items associated (150) to the item provider (15), through the telecommunication network, a certificate comprising at least a signature, a timestamp and an information related to the flow of items, if a certificate has be to transferred.

**12.** Method according to claim 9, **characterised in that** the signature of the certificate is generated using a private key with at least the timestamp and the value of items associated to the flow of items.

**13.** Method according to claim 11 or 12, **characterised in that** the information representative of the receiving from the item provider of a first part of the flow of items by the client is an amount of measured items comprised in the first part of the flow of items, and a certificate is transferred if the amount of the measured items is at least equal to a predetermined amount of items or is at least equal to an expected amount of items comprised in the first part of the flow of items.

**14.** Method according to claim 11 or 12, **characterised in that** a certificate is transferred if a message representative of the end of the delivery of the first part of the flow of items is received by the device for checking the delivery of the flow of items from the telecommunication network.

**15.** Method according to claim 11, **characterised in that** the value of items associated to the flow of items is representative of a measure, by a client measurement device of the client, of the amount of items comprised in the first part of the flow of items.

**16.** Method according to claim 11 or 12, **characterised in that** the value of items associated to the flow of items is representative of a measure, by a client measurement device of the client, of the amount of items comprised in the first part of the flow of items and items comprised in parts of the flow of items prior the first part of the flow of items.

**17.** Method according to claim 15 or 16, **characterised in that** the certificate comprises another value of items which is representative of an expected amount of items comprised in the second part of the flow of items to be measured, by a client measurement device of the client.

**18.** Method according to claim 11, **characterised in that** the value of items associated to the flow of items is representative of an expected amount of items to be measured in the second part of the flow of items, by a client measurement device of the client.

**19.** Method according to claim 11 or 12, **characterised in that** the method comprises the steps of :
- checking (S405) whether or not a second part of the flow of items is received by the client once the certificate has been sent,
- retransferring (S404) another certificate if the second part of the flow is not received, the other certificate being the transferred certificate with an information indicating that the certificate is retransmitted.

**20.** Method according to claim 11 or 12, **characterised in that**, if the amount of the measured items within a predetermined time duration is lower than a predefined amount of items, the certificate comprises information representative of the no delivery of the predefined amount of items within the predetermined time duration.

**21.** Device (150) for controlling the delivery, by an item provider, of a flow of items to at least a client through a distribution network, **characterised in that** the device for controlling the delivery of the flow of items is associated to the item provider and is linked to a telecommunication network, and **in that** the device for controlling the delivery of the flow of items comprises :
- means (300, 305) for authorising the delivery of a first part of the flow of items to a client,
- means (306) for receiving a certificate, through the telecommunication network issued by a device for checking the delivery of items associated to the client,
- means (303) for memorising the certificate,
- means (300) for analysing the content of the certificate which comprises at least a signature of the client, a timestamp, and a value of items associated to the flow of items,
- means (300) for deciding whether or not the delivery of the flow of items has to be stopped according to the content of the certificate.

**22.** Device (100) for checking the delivery of a flow of items to a least a client through a distribution network, **characterised in that**, the device for checking the delivery of the flow of items is associated to the client and is linked to a telecommunication network, and **in that**, the device for checking the delivery of the flow of items comprises :
- means (205) for obtaining an information representative of the receiving by the client of a first part of the flow of items from the item provider,
- means (200) for determining if a certificate has to be transferred to the item provider,
- means (200, 206) for transferring to a device for controlling the delivery of the flow of items associated to the item provider, through the telecommunication network, a certificate comprising at least a signature, a timestamp and an information related to the flow of items, if a certificate has be to transferred.

**23.** Signal transmitted by a device for checking the delivery of the flow of items being associated to a client of an item provider receiving a flow of items from the item provider, **characterised in that**, the signal comprises a certificate comprising at least a signature, a timestamp and an information related to the flow of items.

**24.** Signal according to claim 22, **characterised in that** the value of items associated to the flow of items is representative of a measure, by a client measurement device of the client, of a part of the flow of items.

**25.** Signal according to claim 23, **characterised in that** the value of items associated to the flow of items is representative of an expected amount of items to be measured in the second part of the flow of items, by a client measurement device of the client.

**26.** Computer program which can be directly loadable into a programmable device, comprising instructions or portions of code for implementing the steps of the method according to claims 1 to 10, when said computer program is executed on a programmable device.

**27.** Computer program which can be directly loadable into a programmable device, comprising instructions or portions of code for implementing the steps of the method according to claims 11 to 20, when said computer program is executed on a programmable device.
